# EUROPEAN PATENT APPLICATION

(11) **EP 4 254 108 A1**
(43) Date of publication of application: **04.10.2023**
(21) Application number: 21897367.5
(22) Date of filing: 09.03.2021
(51) Int. Cl.: G05B 23/02, G06F 16/908

(54) **OPERATING ASSISTANCE SYSTEM AND OPERATING ASSISTANCE METHOD**

(30) Priority: 27.11.2020 JP 2020196815
(71) Applicant: OMRON Corporation, Kyoto 600-8530 (JP)
(72) Inventor: NAGATA, Yuta, Kyoto-shi, Kyoto 600-8530 (JP)
(74) Representative: Mewburn Ellis LLP
(86) International application number: PCT/JP2021/009171
(87) International publication number: WO 2022/113387

(57) **Abstract**

An operating assistance system directed to a control system for controlling a control target, the operating assistance system includes: acquisition means configured to acquire a content in which an operation of an operator on a human machine interface (HMI) is recorded; acquisition means configured to acquire meta-information related to the acquired content; storage means configured to store the acquired content and the acquired meta-information in association with each other; search means configured to search for a content matched with a requested query based on the stored meta-information; and reproduction means configured to reproduce a selected content.

## Description

### TECHNICAL FIELD

The present invention relates to a system that assists an operation of an operator who performs a control operation.

### BACKGROUND ART

At various production sites, an operation by an operator is provided to a control device through a device called a human machine interface (HMI), and a situation from the control device is provided to the operator through the HMI.

For example, National Patent Publication No. 2016-506559 (PTL 1) discloses a method for changing an object to be used in a display screen of an HMI device.

### CITATION LIST

### PATENT LITERATURE

PTL 1: National Patent Publication No. 2016-506559

### SUMMARY OF INVENTION

### TECHNICAL PROBLEM

The HMI is one of optimal devices as an interface with the control device, but a speed and accuracy of the operation of the operator depend on knowledge and experience of the operator. For this reason, there is a demand for a mechanism in which even the operator with little knowledge and experience can perform the operation similarly to the skilled operator.

An object of the present invention is to provide a mechanism that enables the operator with the little knowledge and experience to perform an efficient and accurate operati on.

### SOLUTION TO PROBLEM

According to an example of the present invention, an operating assistance system directed to a control system for controlling a control target is provided. The operating assistance system includes: acquisition means configured to acquire a content in which an operation of an operator on a human machine interface (HMI) is recorded; acquisition means configured to acquire meta-information related to the acquired content; storage means configured to store the acquired content and the acquired meta-information in association with each other; search means configured to search for a content matched with a requested query based on the stored meta-information; and reproduction means configured to reproduce the selected content.

According to this configuration, the content in which the operation on the HMI of the operator acquired in the past is recorded can be utilized as the information asset. Consequently, even the operator with little knowledge and experience can support the efficient and accurate operation.

The acquisition means may include a mobile terminal configured to electrically and/or optically observe the operating screen of the HMI. According to this configuration, the content can be easily acquired through the mobile terminal.

The acquisition means may include a capture application that records an operating screen represented on the HMI. According to this configuration, the HMI itself can acquire the content, so that the configuration can be simplified.

When an abnormality and/or an event is generated, the acquisition means may generate the content in which an operation before generation timing of the abnormality and/or the event is recorded. According to this configuration, when any abnormality and/or event is generated, the operation or the like performed immediately before the generation can be verified.

When the abnormality and/or the event is generated, the HMI may be configured to output information related to the generated abnormality and/or event. The output information may be directly or indirectly available as the query. According to this configuration, the related content can be searched using the information output by the generation of the abnormality and/or the event.

The operating assistance system may further include generation means configured to generate the query according to a search condition. According to this configuration, the content can be searched using any keyword desired by the operator.

The reproduction means may include a mobile terminal that reproduces the selected content. According to this configuration, the content can be reproduced by the mobile terminal or the like owned by the operator, so that checking of the content can be facilitated.

The meta information may include an operating history indicating a place on which an operator operated and an operation time of that operation. The reproduction means may additionally display information indicating a content to be operated on the operating screen of the HMI based on the meta-information associated with the selected content. According to this configuration, the more reliable operation can be implemented by the operator based on the previously-acquired content.

The operating assistance system may further include first generation means configured to generate a second operating screen collecting and displaying the selected one or more operating objects according to selection of an operating object among the plurality of operating objects included in the operating screen of the HMI. According to this configuration, only a specific operation or an operating object used for a specific purpose can be aggregated in the same operating screen, so that operating efficiency can be increased and the generation of a defect such as an operating mistake can be reduced.

The operating assistance system may further include second generation means configured to generate a third operating screen including an operating object accessing the selected one or more pages in response to selection of a page among the operating screens of the plurality of pages provided by the HMI. According to this configuration, a transition to a specific operation or an operating screen used for a specific application can be more easily performed, so that the efficiency of the operation can be increased and the generation of the defect such as the operating mistake can be reduced.

According to another example of the present invention, an operating support method executed in a control system for controlling a control target is provided. The operating support method includes: acquiring a content in which an operation of an operator on an HMI is recorded; acquiring meta-information related to the acquired content; storing the acquired content and the acquired meta-information in association with each other; searching for a content matched with a requested query based on the stored meta information; and reproducing the selected content.

### ADVANTAGEOUS EFFECTS OF INVENTION

According to the present invention, the mechanism that enables the operator with the little knowledge and experience to perform the efficient and accurate operation can be provided.

### BRIEF DESCRIPTION OF DRAWINGS

Fig. 1 is a schematic diagram illustrating an overall configuration example of an operating assistance system according to an embodiment.
Fig. 2 is a view illustrating a typical processing example in the operating assistance system of the embodiment.
Fig. 3 is a block diagram illustrating a hardware configuration example of a PLC constituting the operating assistance system of the embodiment.
Fig. 4 is a block diagram illustrating a hardware configuration example of an HMI constituting the operating assistance system of the embodiment.
Fig. 5 is a block diagram illustrating a hardware configuration example of a mobile terminal constituting the operating assistance system of the embodiment.
Fig. 6 is a block diagram illustrating a hardware configuration example of a server constituting the operating assistance system of the embodiment.
Fig. 7 is a schematic diagram illustrating an outline of processing that can be provided by the operating assistance system of the embodiment.
Fig. 8 is a view illustrating an example of a content acquiring method in the operating assistance system of the embodiment.
Fig. 9 is a view illustrating an example of a method for acquiring meta-information in the operating assistance system of the embodiment.
Fig. 10 is a view illustrating an example of a query generating method in the operating assistance system of the embodiment.
Fig. 11 is a view illustrating an example of a search result in the operating assistance system of the embodiment.
Fig. 12 is a view illustrating an example of operating support using the meta-information in the operating assistance system of the embodiment.
Fig. 13 is a sequence diagram illustrating a processing procedure related to content acquisition in the operating assistance system of the embodiment.
Fig. 14 is a sequence diagram illustrating a processing procedure related to utilization of content in the operating assistance system of the embodiment.
Fig. 15 is a view illustrating processing according to a modification of the content acquisition in the operating assistance system of the embodiment.
Fig. 16 is a view illustrating processing according to still another modification of the content acquisition in the operating assistance system of the embodiment.
Fig. 17 is a view illustrating a processing example related to operating navigation in the operating assistance system of the embodiment.
Fig. 18 is a view illustrating a processing example related to operating navigation in the operating assistance system of the embodiment.
Fig. 19 is a schematic diagram illustrating an example of an operating screen provided by the HMI of the operating assistance system of the embodiment.
Fig. 20 is a schematic diagram illustrating an example of shortcut production to an operating object in the HMI of the operating assistance system of the embodiment.
Fig. 21 is a schematic diagram illustrating another example of the operating screen provided by the HMI of the operating assistance system of the embodiment.
Fig. 22 is a view illustrating a procedure example of page bookmark production in the HMI of the operating assistance system of the embodiment.
Fig. 23 is a view illustrating a display example of a page bookmark in the HMI of the operating assistance system of the embodiment.

### DESCRIPTION OF EMBODIMENT

With reference to the drawings, an embodiment of the present invention will be described in detail. The same or equivalent part in the drawings is denoted by the same reference numeral, and the description will not be repeated.

### <A. Application example>

An example of a scene to which the present invention is applied will be described.

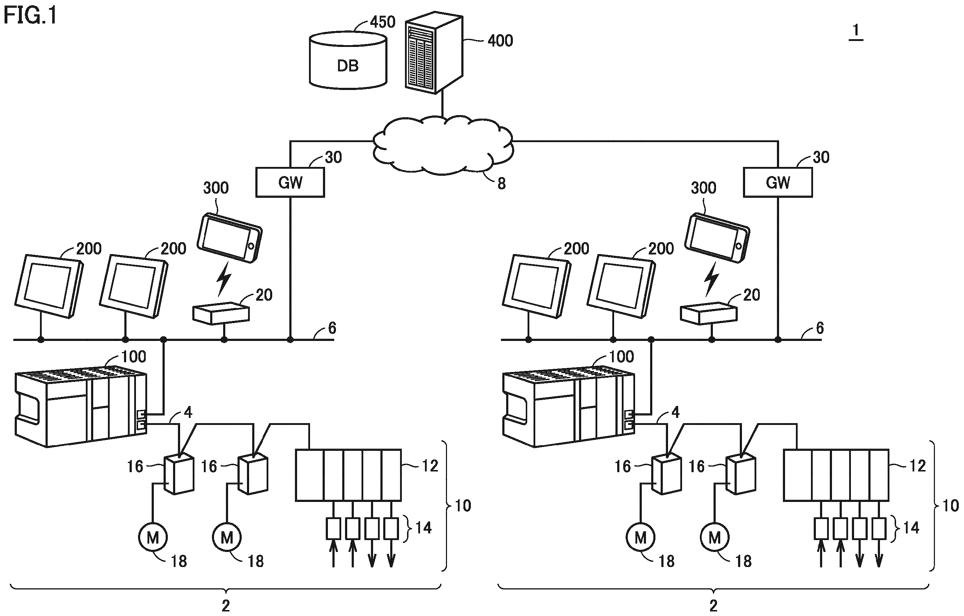

Fig. 1 is a schematic diagram illustrating an overall configuration example of an operating assistance system 1 according to an embodiment. With reference to Fig. 1, operating assistance system 1 of the embodiment is directed to a control system 2 that controls a control target. Typically, operating assistance system 1 includes one or more control systems 2. Each of control systems 2 may control an entire factory or may control a specific manufacturing facility or manufacturing device installed in the factory. Each of control systems 2 may be provided at any place. For example, when a manufacturer having manufacturing bases in a plurality of countries, control systems 2 may be provided in different countries.

Each of control systems 2 includes a programmable logic controller (PLC) 100 that is a typical example of a control device that controls the control target, an HMI 200 connected to PLC 100, a mobile terminal 300, and a server 400 as main components.

PLC 100 is also connected to a field device group 10. Field device group 10 includes any device required for controlling the control target. More specifically, field device group 10 includes a device that exchanges information with the control target (for example, a manufacturing device, a manufacturing facility, and a sensor and an actuator included in the manufacturing facility or the manufacturing device). In the example of Fig. 1, field device group 10 includes a remote input and output (I/O) device 12, a relay group 14, a servo driver 16, and a servo motor 18.

PLC 100 acquires information from field device group 10 and executes control arithmetic operation according to a previously-produced user program, thereby generating information provided to field device group 10. Hereinafter, the information acquired by PLC 100 from field device group 10 is also referred to as "input data", and the information provided to field device group 10 is also referred to as "output data".

In the example of Fig. 1, PLC 100 and field device group 10 are connected to each other through a control system network 4. The present invention is not limited thereto, but may be connected by a hard wire.

An industrial communication protocol is preferably adopted as control system network 4. EtherCAT (registered trademark), EtherNet/IP (registered trademark), DeviceNet (registered trademark), CompoNet (registered trademark), and the like are known as such a communication protocol.

Upon receiving the operation from the operator, HMI 200 transmits a command or the like indicating the operating content to PLC 100 and graphically displays various pieces of information from PLC 100.

HMI 200 and mobile terminal 300 execute various pieces of processing for supporting the operation of the operator. Details of the processing for supporting the operation will be described later.

In the example of Fig. 1, PLC 100 and HMI 200 are connected to each other through an information system network 6. A general-purpose communication protocol such as Ethernet (registered trademark) may be adopted as information system network 6. Furthermore, in the example of Fig. 1, mobile terminal 300 may be connectable to information system network 6 through an access point 20.

A gateway 30 is provided in information system network 6, and can access server 400 through the Internet 8 or the like.

Server 400 stores information supporting the operation of the operator in a content database 450, and provides the information stored in content database 450 as required. Server 400 may be disposed on a cloud through the Internet 8, or may be disposed in a local network where control system 2 exists without the Internet 8. An implementation form of server 400 can be arbitrarily determined according to required performance, functions, and the like.

Operating assistance system 1 of the embodiment can implement some or all of a plurality of pieces of processing described later. As an application example, processing that can acquire and use information (typically, a moving image) in which the operation of the operator is recorded will be described.

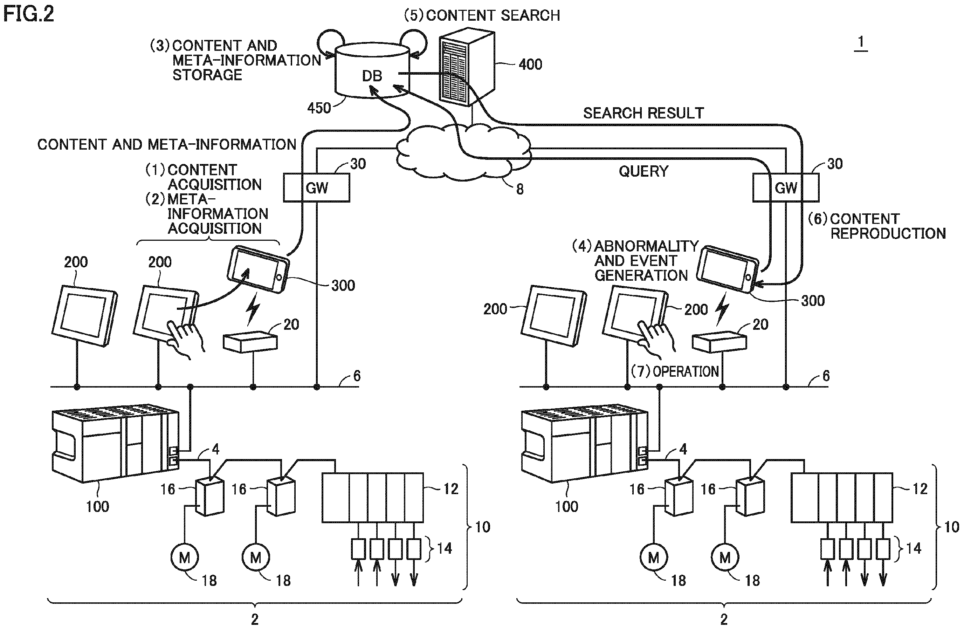

Fig. 2 is a view illustrating a typical processing example in operating assistance system 1 of the embodiment. With reference to Fig. 2, the operation of the operator on HMI 200 is recorded according to any condition satisfied or an explicit instruction. Hereinafter, the result of recording the operation of the operator on HMI 200 is also simply referred to as "content". In this way, a content 50 in which the operation of the operator on the HMI is recorded is acquired ((1) content acquisition). Meta-information 60 related to the acquired content is also acquired ((2) meta-information acquisition). Meta-information 60 is used as information searching content 50. Furthermore, content 50 and corresponding meta-information 60 are stored in association with each other ((3) content and meta-information storage).

Fig. 2 illustrates an example in which mobile terminal 300 acquires content 50 and meta-information 60 and transmits acquired content 50 and meta-information 60 to server 400. Server 400 stores content 50 transmitted from mobile terminal 300 in content database 450 together with added meta-information 60.

The above-described processing may be repeatedly executed every time any abnormality and/or event is generated.

Thereafter, when any abnormality and/or event occurs ((4) generation of abnormality and event), a query that is a search request is generated and transmitted to server 400. Server 400 searches content 50 matched with the requested query based on stored meta-information 60 ((5) content search).

The operator selects any content 50 from the search results returned from server 400. Then, selected content 50 is reproduced ((6) content reproduction). The operator performs a required operation on HMI 200 with reference to reproduced content 50 ((7) operation).

Fig. 2 illustrates an example in which, when some abnormality and/or event is generated, HMI 200 outputs information required for generating the query, and mobile terminal 300 transmits the query based on the output information.

When operating assistance system 1 capable of utilizing such content 50 is provided, even the operator with little knowledge and experience can easily perform the operation similar to the skilled operator. Furthermore, acquired content 50 can also be used for education for the operator with little knowledge and experience.

### <B. Hardware configuration>

An example of a hardware configuration of a device constituting operating assistance system of the embodiment will be described below.

### (b1: PLC 100)

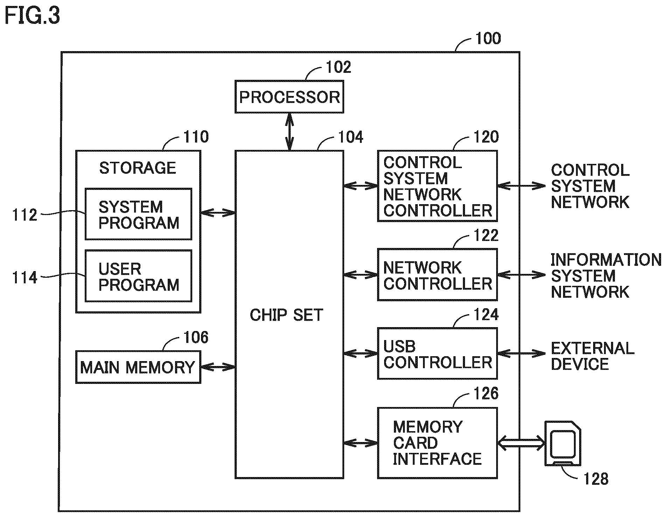

Fig. 3 is a block diagram illustrating the hardware configuration example of PLC 100 constituting operating assistance system 1 of the embodiment. With reference to Fig. 3, PLC 100 includes a processor 102 such as a central processing unit (CPU) or a micro-processing unit (MPU), a chip set 104, a main memory 106, a storage 110, a control system network controller 120, an information system network controller 122, and a universal serial bus (USB) controller 124, and a memory card interface 126.

Processor 102 reads various programs stored in storage 110, expands the various programs in main memory 106, and executes the various programs, thereby implementing the control arithmetic operation controlling the control target. Chip set 104 controls data transmission and the like between processor 102 and each component.

Storage 110 stores a system program 112 implementing basic processing and a user program 114 implementing the control arithmetic operation.

Control system network controller 120 controls data exchange with the field device group 10 through control system network 4.

Information system network controller 122 controls the data exchange with HMI 200 and the like through information system network 6.

USB controller 124 controls the data exchange with an external device (for example, a support device) through USB connection.

Memory card interface 126 is configured such that a memory card 128 is detachably attached, and memory card interface 126 can write the data in memory card 128 and read various data (user programs, trace data, and the like) from memory card 128.

Although the configuration example in which required processing are provided by processor 102 executing the program has been described in Fig. 3, a part or all of provided processing may be implemented using a dedicated hardware circuit (for example, an application specific integrated circuit (ASIC) and a field-programmable gate array (FPGA)). Alternatively, the main part of PLC 100 may be implemented using hardware (for example, an industrial personal computer based on a general-purpose personal computer) according to a general-purpose architecture. In this case, a plurality of operating systems (OSs) having different uses may be executed in parallel using a virtualization technology, and the necessary application may be executed on each OS.

### (b2: HMI 200)

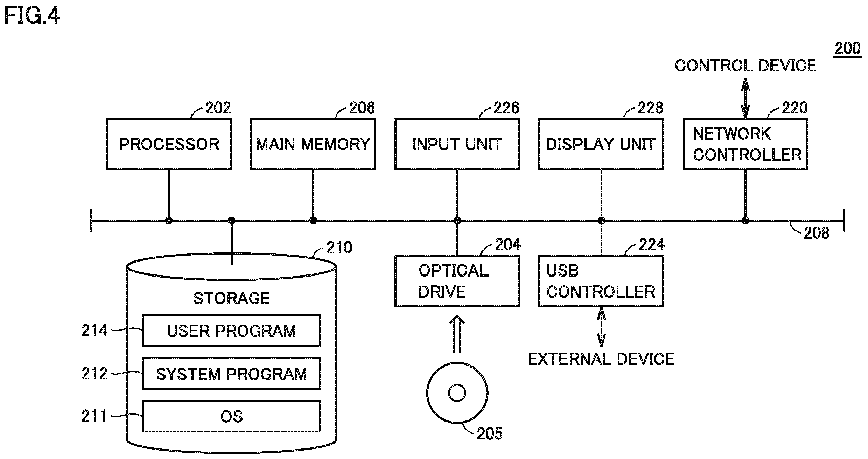

Fig. 4 is a block diagram illustrating the hardware configuration example of HMI 200 constituting operating assistance system 1 of the embodiment. With reference to Fig. 4, HMI 200 includes a processor 202 such as a CPU or an MPU, an optical drive 204, a main memory 206, a storage 210, a network controller 220, a USB controller 224, an input unit 226, and a display unit 228. These components are connected to each other through a bus 208.

Processor 202 reads various programs stored in storage 210, develops the programs in main memory 206, and executes the programs, thereby implementing required processing in HMI 200.

For example, storage 210 includes a hard disk drive (HDD) or a flash solid state drive (SSD). Typically, an operating system (OS) 211, a system program 212 implementing basic processing, and a user program 214 produced previously according to the control target are stored in storage 210. Required programs other than the program in Fig. 4 may be stored in storage 210.

HMI 200 may include optical drive 204. Optical drive 204 reads a computer-readable program from a recording medium 205 (for example, an optical recording medium such as a digital versatile disc (DVD)) that non-transiently stores the program, and stores the program in storage 210 or the like.

Various programs executed by HMI 200 may be installed through computer-readable recording medium 205, and may be installed by being downloaded from any server on the network.

Network controller 220 controls the data exchange with PLC 100 and the like through control system network 4.

USB controller 224 controls the data exchange with the external device through USB connection.

Input unit 226 is configured of a touch panel, a mouse, a keyboard, and the like, and receives the instruction from the operator. Display unit 228 is configured of a display, various indicators, and the like, and outputs a processing result and the like from processor 202.

Although the configuration example in which the required function is provided by processor 202 executing the program has been illustrated in Fig. 4, some or all of these provided functions may be implemented using the dedicated hardware circuit (for example, the ASIC or the FPGA).

### (b3: mobile terminal 300)

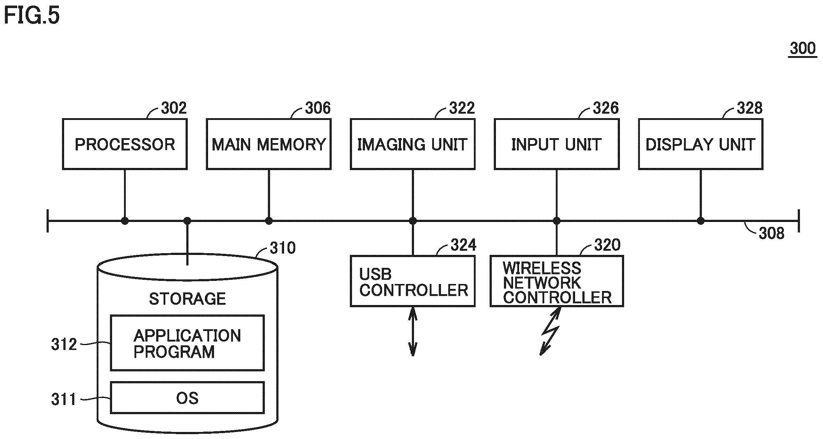

Fig. 5 is a block diagram illustrating the hardware configuration example of mobile terminal 300 constituting operating assistance system 1 of the embodiment. With reference to Fig. 5, mobile terminal 300 includes a processor 302 such as a CPU or an MPU, a main memory 306, a storage 310, a wireless network controller 320, an imaging unit 322, a USB controller 324, an input unit 326, and a display unit 328. These components are connected to each other through a bus 308.

Processor 302 reads various programs stored in storage 310, develops the programs in main memory 306, and executes the programs, thereby implementing required processing in mobile terminal 300.

For example, storage 310 is configured by the HDD or the SSD. Storage 310 typically stores an OS 311 and an application program 312 implementing processing as described later. Required programs other than the program in Fig. 5 may be stored in storage 310. For example, various programs executed by mobile terminal 300 may be installed by being downloaded from any server on the network.

Imaging unit 322 is disposed on an exposed surface of mobile terminal 300 and captures an image of an object included in an imaging range.

USB controller 324 controls the data exchange with the external device through the USB connection.

Wireless network controller 320 controls the data exchange with a relay device and the external device through a wireless network.

Input unit 326 is configured of a touch panel, a mouse, a keyboard, and the like, and receives the instruction from the operator. Display 328 is configured of a display, various indicators, and the like, and outputs a processing result and the like from processor 402.

Although the configuration example in which the required function is provided by processor 302 executing the program has been illustrated in Fig. 5, some or all of these provided functions may be implemented using the dedicated hardware circuit (for example, the ASIC or the FPGA).

### (b4: Server 400)

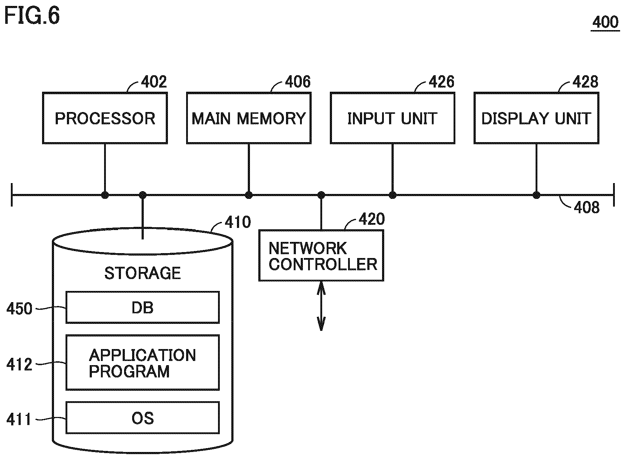

Fig. 6 is a block diagram illustrating the hardware configuration example of server 400 constituting operating assistance system 1 of the embodiment. With reference to Fig. 6, server 400 includes a processor 402 such as a CPU or an MPU, a main memory 406, a storage 410, a network controller 420, an input unit 426, and a display unit 428. These components are connected to each other through a bus 408.

Processor 402 reads various programs stored in storage 410, develops the programs in main memory 406, and executes the programs, thereby implementing required processing in server 400.

For example, storage 410 is configured by the HDD or the SSD. Storage 410 typically stores an OS 411 and an application program 412 implementing processing as described later. Required programs other than the program in Fig. 6 may be stored in storage 410.

Network controller 420 controls data the exchange with various devices through the network.

Input unit 426 is configured by a keyboard, a mouse, and the like, and receives the instruction from the operator. Display unit 428 is configured of a display and the like, and outputs a processing result and the like from processor 402.

Although the configuration example in which the required function is provided by processor 402 executing the program has been illustrated in Fig. 6, some or all of these provided functions may be implemented using the dedicated hardware circuit (for example, the ASIC or the FPGA).

### <C. Outline of Processing>

Processing that can be provided by operating assistance system 1 of the embodiment will be schematically described below.

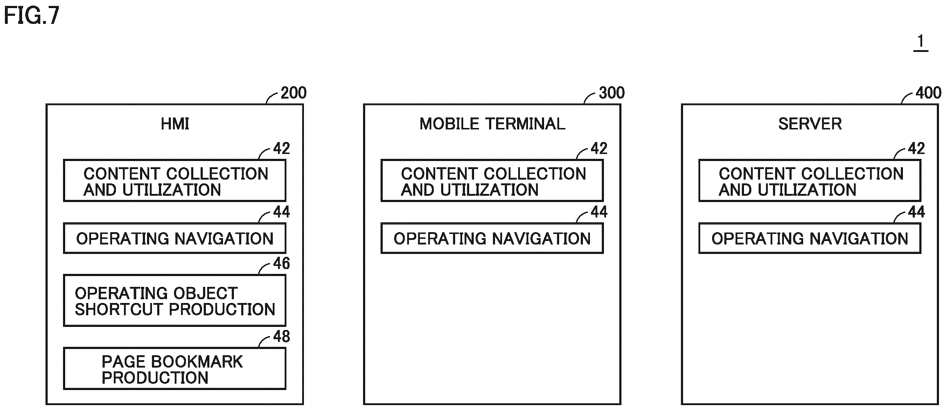

Fig. 7 is a schematic diagram illustrating an outline of the processing that can be provided by operating assistance system 1 of the embodiment. With reference to Fig. 7, operating assistance system 1 can perform content acquisition and utilization processing 42, operating navigation processing 44, operating object shortcut production processing 46, and page bookmark production processing 48.

Content acquisition and utilization processing 42 is a function used to share and refer to the operation of a skilled operator and the like, and may involve HMI 200, mobile terminal 300, and server 400.

Operating navigation processing 44 is a function supporting the operation on the operating screen of the operator, and may involve HMI 200 and mobile terminal 300.
operating object shortcut production processing 46 is a function that can facilitate access to the operating object included in the operating screen, and may involve HMI 200.

Page bookmark production processing 48 is a function facilitating access to a page constituting the operating screen, and may involve HMI 200.

All pieces of processing in Fig. 7 are not required for being implemented, but the processing may be appropriately implemented according to the required processing. In addition, processing that may involve a plurality of devices may be implemented by a single device, processing that may involve only the single device, or processing that may involve a plurality of devices.

### <D. Acquisition and utilization of content>

Content acquisition and utilization processing 42 will be described below.

### (d1: Acquisition of content)

First, an example of processing for acquiring content 50 will be described. Content 50 records the operation performed on HMI 200 by the operator, and is typically generated in the form of a moving image. However, content 50 may be generated as a set of one or more still images. Consequently, content 50 is generated by recording the operating screen displayed on display unit 228 of HMI 200 by any method.

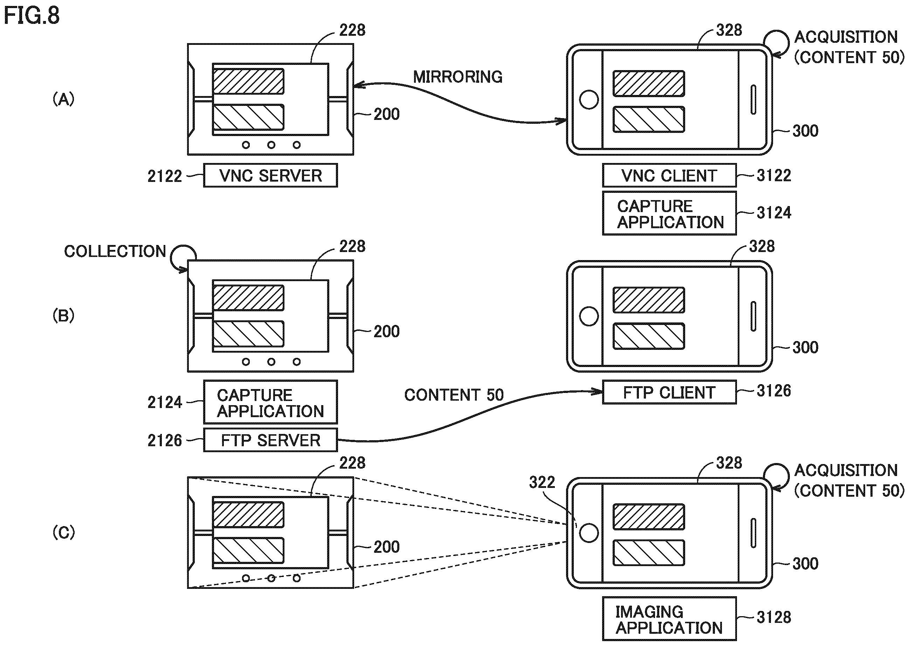

Fig. 8 is a view illustrating an example of a content acquiring method in operating assistance system 1 of the embodiment. Fig. 8(A) illustrates an example in which virtual network computing (VNC) is used, Fig. 8(B) illustrates an example in which file transfer (for example, a file transfer protocol (FTP)) is used, and Fig. 8(C) illustrates an example in which the imaging unit is used.

With reference to Fig. 8(A), HMI 200 includes a VNC server 2122, and mobile terminal 300 includes a VNC client 3122 and a capture application 3124. The operating screen displayed on display unit 228 of HMI 200 is mirrored between VNC server 2122 and VNC client 3122.

Because the operating screen displayed on display unit 228 of HMI 200 is provided in real time on mobile terminal 300, the operating screen displayed on display unit 228 to which capture application 3124 of mobile terminal 300 is provided is recorded. In this manner, mobile terminal 300 acquires content 50 by electrically connecting and observing the operating screen of HMI 200.

With reference to Fig. 8(B), HMI 200 includes a capture application 2124 and an FTP server 2126, and mobile terminal 300 includes an FTP client 3126. Capture application 2124 of HMI 200 records the operating screen displayed on display unit 228 of HMI 200 to generate content 50. Then, content 50 is transferred between FTP server 2126 and FTP client 3126. As described above, capture application 2124 that records the operating screen may be represented on HMI 200.

With reference to Fig. 8(C), mobile terminal 300 includes an imaging application 3128. Display unit 228 of HMI 200 is imaged by imaging unit 322 of mobile terminal 300 while recorded by imaging application 3128 and generates content 50. In this manner, mobile terminal 300 acquires content 50 by optically observing the operating screen of HMI 200.

With the above configuration and processing, HMI 200 and/or mobile terminal 300 acquires content 50. That is, at least one of HMI 200 and mobile terminal 300 executes processing for acquiring content 50 in which the operation of the operator on HMI 200 is recorded. The method for acquiring content 50 by mobile terminal 300 is not limited to the above-described method, but any method can be adopted.

### (d2: Acquisition of meta-information)

Acquired content 50 to which meta-information 60 is added is stored in server 400 (content database 450).

Meta-information 60 is used for searching content 50. Meta-information 60 can include any information specifying corresponding content 50. Meta-information 60 may include date and time, a place, an operator name, a device name, a format, error information, PLC status information, entire system status information, an event history, an operating history (for example, time series information), and an operating history (click location or time (for example, in the form of xx seconds from a start time)) as an example. Meta-information 60 may include description or the like arbitrarily described by the operator.

As a more specific example, meta-information 60 may include a device-specific profile. Examples of the device-specific profile include a device format, a serial number, a line name, a facility name, and an operation accumulation time.

Moreover, meta-information 60 may include a profile of the operator. Examples of the profile of the operator include a proficiency level, a department, a department (a production management department or a maintenance department), a used language, and a past search history.

Meta-information 60 may include waveform data of a signal or a variable related to the acquisition of corresponding content 50. Furthermore, meta-information 60 may include image data (for example, an image obtained by capturing a state in which the device is damaged) obtained by capturing an image of an abnormality and/or an event in which corresponding content 50 is acquired.

Meta-information 60 may be generated by HMI 200 according to the operation on HMI 200 by the operator and a status of PLC 100. That is, HMI 200 can be generated and output.

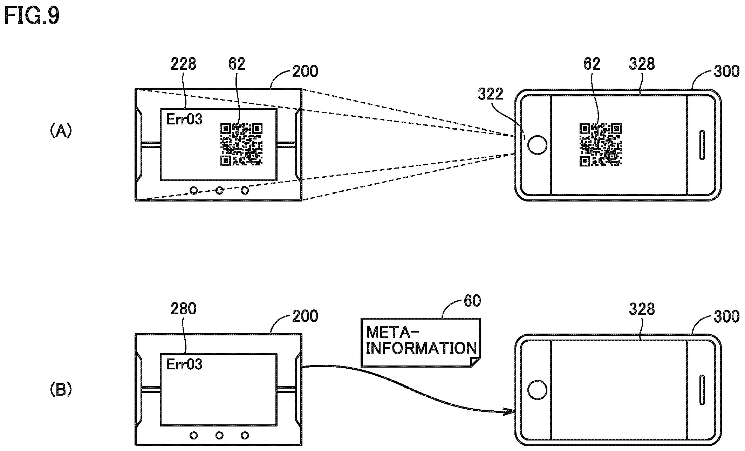

Fig. 9 is a view illustrating an example of a method for acquiring meta-information 60 in operating assistance system 1 of the embodiment. Fig. 9(A) illustrates an example in which an imaging unit is used, and Fig. 9(B) illustrates an example in which device-to-device communication is used.

With reference to Fig. 9(A), when any abnormality and/or event is generated, HMI 200 generates meta-information 60 related to the generated abnormality and/or event, and displays an image code 62 (for example, a QR code (registered trademark)) obtained by encoding generated meta-information 60. The operator operates mobile terminal 300 to image display unit 228 of HMI 200 with imaging unit 322. Consequently, mobile terminal 300 can acquire image code 62 indicating meta-information 60.

With reference to Fig. 9(B), when any abnormality and/or event is generated, HMI 200 generates meta-information 60 related to the generated abnormality and/or event. Meta-information 60 generated by HMI 200 is transferred to mobile terminal 300 by any data communication method. Consequently, mobile terminal 300 can acquire image code 62 indicating meta-information 60. As the data communication method, near field communication such as NFC may be adopted in addition to the wireless communication.

With the above configuration and processing, HMI 200 and/or mobile terminal 300 acquires meta-information 60. That is, at least one of HMI 200 and mobile terminal 300 executes the processing for acquiring the meta information related to the acquired content. The method for acquiring meta-information 60 by mobile terminal 300 is not limited to the above-described method, but any method can be adopted. For example, the operator may manually input a code displayed on HMI 200 into mobile terminal 300.

### (d3: Storage of content and meta-information)

HMI 200 transmits acquired content 50 and corresponding meta-information 60 to server 400 in association with each other. Server 400 stores content 50 transmitted from HMI 200 in content database 450, and associates corresponding meta-information 60 with content 50 as the search information. In this way, the processing for storing acquired content 50 and acquired meta-information 60 in association with each other is executed.

### (d4: Search for content)

In response to a query, server 400 searches for content 50 matched with the query in contents 50 stored in content database 450. Meta-information 60 corresponding to each content 50 is used for the search of content 50. Server 400 may respond with content 50 matched with the query in a ranking format, or may respond with most matched content 50. In this manner, server 400 searches for the content matched with the requested query based on stored meta-information 60.

### Typically, mobile terminal 300 generates and transmits the query to server 400.

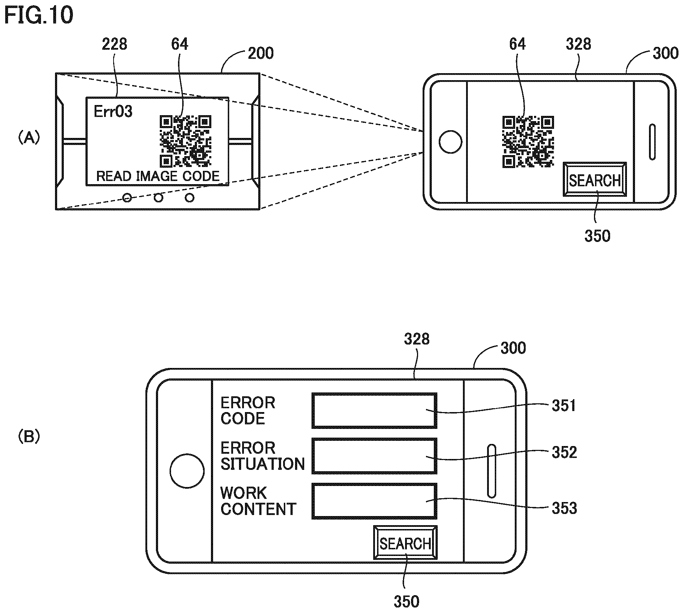

Fig. 10 is a view illustrating an example of the query generating method in operating assistance system 1 of the embodiment.

Fig. 10(A) illustrates an example of a situation in which, when some kind of abnormality and/or event is generated, the content coping with the abnormality and/or event is searched. When the abnormality and/or event is generated, HMI 200 outputs information related to the generated abnormality and/or event. As an example, HMI 200 displays an image code 64 (for example, the QR code (registered trademark) or the like) obtained by encoding identification information identifying the generated abnormality and/or event.

The operator operates mobile terminal 300 to image display unit 228 of HMI 200 with imaging unit 322. Thus, mobile terminal 300 can acquire image code 64 specifying the generated abnormality and/or event. When the operator presses a search button 350 displayed on display unit 328 of mobile terminal 300, mobile terminal 300 transmits image code 64 as it is or the identification information included in image code 64 as the query to server 400. In this manner, the information (for example, image code 64) output from HMI 200 can be directly or indirectly used as the query.

As an example, mobile terminal 300 (alternatively, HMI 200) may generate and transmit the query including identification information identifying the generated abnormality and/or event.

Furthermore, mobile terminal 300 (alternatively, HMI 200) may generate the query according to any search condition.

Fig. 10(B) illustrates an example of a situation in which the operator with the little knowledge and experience receives support of the operation on HMI 200 in addition to when some abnormality and/or event is generated. Search word input fields 351, 352, 353 are displayed on mobile terminal 300, and the operator can input arbitrary characters.

In the example of Fig. 10(B), an error code is input in search word input field 351, an error state is input in search word input field 352, and a work content is input in search word input field 353.

The operator inputs arbitrary characters in a part or all of search word input fields 351, 352, 353 according to the purpose of the search and presses search button 350, so that mobile terminal 300 generates the query including the content of the input characters and transmits the query to server 400.

By implementing such processing, the operator can input the error code or the error state to search for content 50 related to the generated abnormality and/or event. In addition, the operator can search for related content 50 by inputting a keyword related to a desired operation or a certain operating procedure in accordance with the operating content of HMI 200.

In operating assistance system 1, a search condition may be able to be designated. For example, the following search conditions may be adopted.
(1) Arbitrary time designation (for example, the update date and the production date of the content, the generation date and time of the abnormality and/or event, and the update and/or the production within a predetermined time from the present)
(2) Any image (for example, a place where the abnormality and/or event is generated is imaged in mobile terminal 300, and an image similar to the image obtained by the imaging is included as meta-information 60)
(3) Waveform data of arbitrary signal and/or variable (waveform data similar to actually acquired waveform data is searched as meta-information 60, and whether the phenomenon similar to the waveform data existed in the past or the like.)

The query generation method and transmission method by mobile terminal 300 are not limited to those described above, and any method can be adopted. For example, the image obtained by imaging display unit 228 of HMI 200 by imaging unit 322 of mobile terminal 300 may be transmitted as it is as the query.

Any data structure can be adopted as the data structure of the query. For example, the format may be a format directly including the character or code as a search target such as a natural language or a keyword (for example, a hash tag), or may be a REST format (for example, "http://server/?err=03").

In response to the query from mobile terminal 300, server 400 searches for content 50 matched with the query.

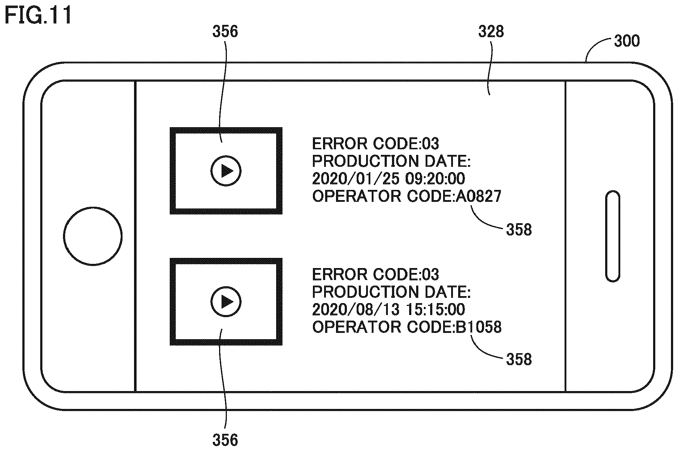

Fig. 11 is a view illustrating an example of a search result in operating assistance system 1 of the embodiment. With reference to Fig. 11, the search result of server 400 is transmitted to mobile terminal 300. A thumbnail 356 indicating content 50 matched with the query is displayed on display unit 328 of mobile terminal 300. A description 358 reflecting the content of meta-information 60 may be displayed in association with thumbnail 356.

The operator selects thumbnail 356 considered to be suitable for the purpose while referring to description 358, so that mobile terminal 300 acquires and reproduces corresponding content 50. That is, mobile terminal 300 reproduces content 50 selected by the operator.

### (d5: Reproduction and operating support of content)

As described above, when the operator selects any one of contents 50 from the list of searched contents 50, the reproduction of contents 50 is started. The device that reproduces content 50 may be mobile terminal 300 or HMI 200. Furthermore, the information may be displayed on any device (for example, AR or VR goggle) worn by the operator. As described above, any device may reproduce content 50.

When content 50 is reproduced by the device other than mobile terminal 300, the information about content 50 selected by the operator may be transmitted from mobile terminal 300 to any device.

In this manner, HMI 200, mobile terminal 300, and any other device execute the processing for reproducing selected content 50.

In addition to the reproduction of content 50, the operation of the operator may be supported in conjunction with the reproduction of content 50. For example, the matching between the actual operation of the operator and the operation of the operator recorded in content 50 can be determined using the operating history (including the place on which the operator operated and the operation time of that operation) included in meta-information 60 added to content 50 of the reproduction target. Examples of such operating support include the following.
(1) The reproduction of content 50 is temporarily stopped in conjunction with the operation of the operator recorded in content 50.
(2) The content of corresponding meta-information 60 is superimposed and displayed in the form of narration or caption on displayed content 50.
(3) Auxiliary information (for example, presentation of the position to be clicked next) is displayed on HMI 200 such that the actual operator can perform the correct operation, and a warning (for example, the position to be clicked is not clicked) is displayed when the correct operation is not performed.

When the operating support is performed, only meta-information 60 associated with content 50 may be used without reproducing content 50 itself. Even in such a case, it can be included in the reproduction of content 50.

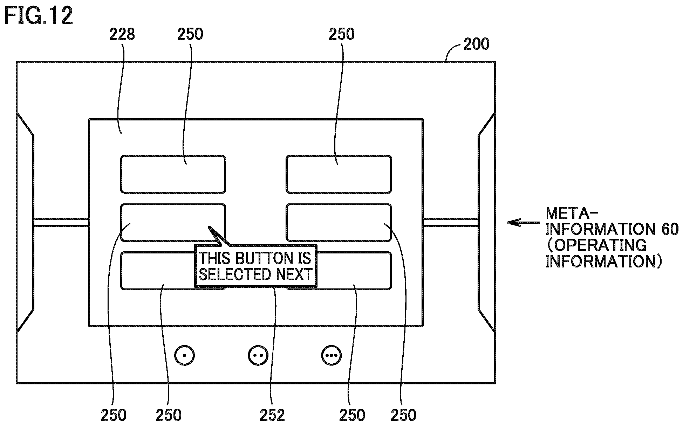

Fig. 12 is a view illustrating an example of operating support using meta-information 60 in operating assistance system 1 of the embodiment. Fig. 12 illustrates an example in which HMI 200 displays a narration 252 using the operating history included in meta-information 60 associated with content 50 selected by the operator. More specifically, one or more button objects 250 are arranged on display unit 228 of HMI 200. Button object 250 is originally displayed on HMI 200. HMI 200 displays narration 252 that supports the operation of the operator with reference to meta-information 60 in addition to button object 250.

In the example of Fig. 12, in a series of operations, narration 252 including a message "Next, select this button" is displayed in association with button object 250 to be selected next by the operator. As described above, HMI 200 may additionally display the information (for example, narration 252) indicating the content to be operated on the operating screen of HMI 200 based on meta-information 60 (including the operating history) associated with selected content 50 as an example of the reproduction processing of content 50.

The operator can refer to such narration 252 to perform the same operation as the operation of the operator recorded in selected content 50.

### (d6: Processing procedure)

A processing procedure related to the acquisition and utilization of the content will be described below.

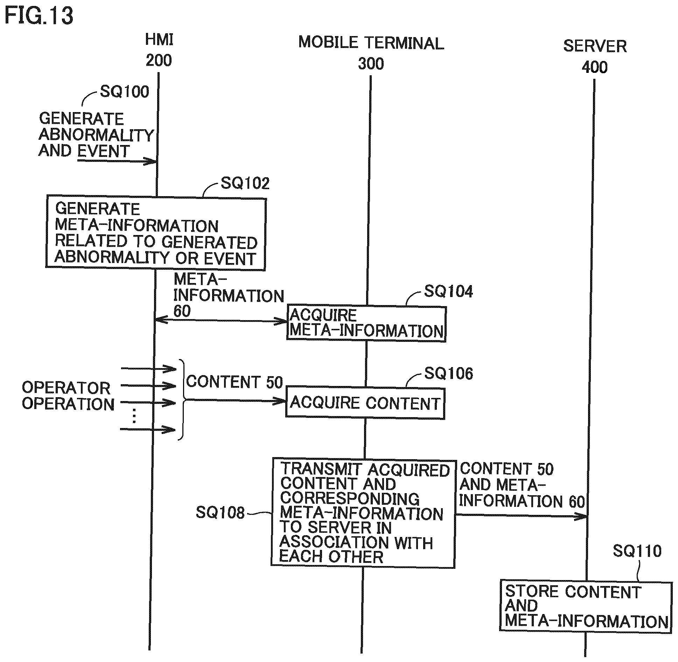

Fig. 13 is a sequence diagram illustrating the processing procedure related to content acquisition in operating assistance system 1 of the embodiment. With reference to Fig. 13, when detecting the generation of any abnormality and/or event (sequence SQ100), HMI 200 generates meta-information 60 related to the generated abnormality and/or event (sequence SQ102). Mobile terminal 300 obtains meta-information 60 by any method (sequence SQ104).

Mobile terminal 300 acquires content 50 in which one or more operations performed on HMI 200 by the operator are recorded (sequence SQ106). Mobile terminal 300 transmits acquired content 50 and corresponding meta-information 60 to server 400 in association with each other (sequence SQ108).

Server 400 stores content 50 and meta-information 60 that are transmitted from mobile terminal 300 (sequence SQ110).

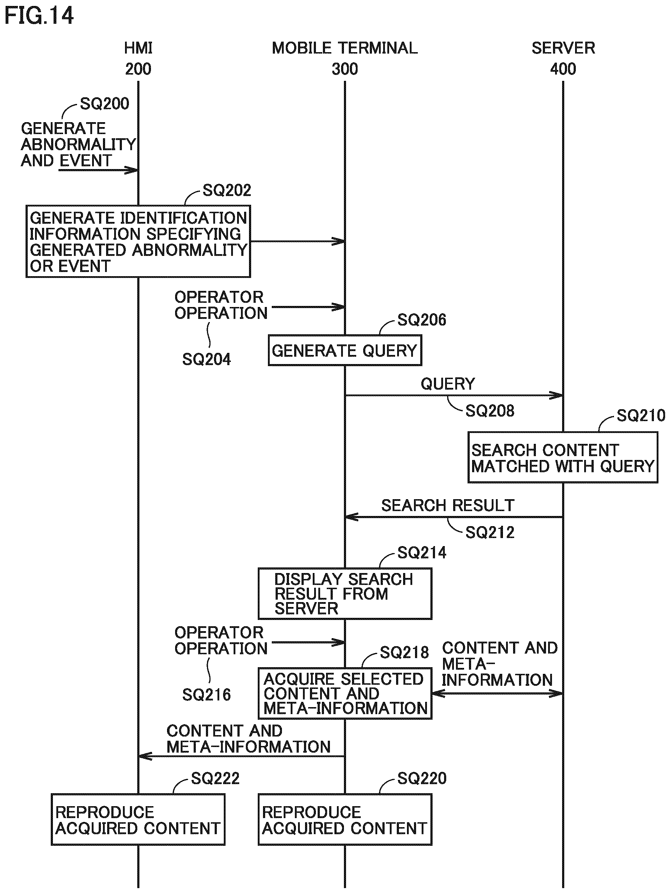

Fig. 14 is a sequence diagram illustrating the processing procedure related to utilization of content in operating assistance system 1 of the embodiment. With reference to Fig. 14, when the generation of any abnormality and/or event is detected (sequence SQ200), HMI 200 generates the identification information specifying the generated abnormality and/or event (sequence SQ202). Then, mobile terminal 300 acquires the identification information generated by HMI 200 and generates the query (sequence SQ206).

Furthermore, when receiving the operation for inputting the search condition from the operator (sequence SQ204), mobile terminal 300 generates the query based on the input search condition (sequence SQ206).

Mobile terminal 300 transmits the generated query to server 400 (sequence SQ208). In response to the query from mobile terminal 300, server 400 searches for content 50 matched with the query among content 50 stored in content database 450 (sequence SQ210). Then, server 400 transmits the search result to mobile terminal 300 (sequence SQ212).

Mobile terminal 300 displays the search result from server 400 (sequence SQ214). Then, when receiving the selection of one of contents 50 from the operator (sequence SQ216), mobile terminal 300 acquires selected content 50 and meta-information 60 (sequence SQ218). Further, mobile terminal 300 reproduces acquired content 50 (sequence SQ220).

Alternatively, mobile terminal 300 provides acquired content 50 and meta-information 60 to HMI 200 or the like, and HMI 200 reproduces content 50 (sequence SQ222).

### (d7: Modification related to acquisition of content 50)

Although the example in which the mobile terminal 300 acquires the content 50 has been described, the device that acquires the content 50 is not limited thereto. For example, HMI 200 itself may produce content 50 and transmit the content to server 400, or any device connected to information system network 6 may acquire content 50.

Furthermore, mobile terminal 300 may generate content 50 by the method as illustrated in Figs. 8(A) and 8(C) and transfer generated content 50 to HMI 200 as a file. In this case, HMI 200 may transmit content 50 acquired from mobile terminal 300 and meta-information 60 generated by the own device to server 400 in association with each other.

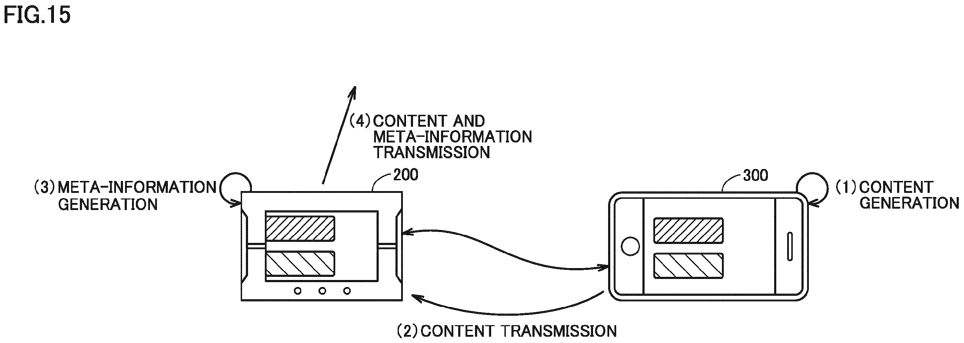

Fig. 15 is a view illustrating processing according to a modification of the content acquisition in operating assistance system 1 of the embodiment. With reference to Fig. 15, mobile terminal 300 generates content 50 in which the operation of the operator is recorded by any method ((1) content generation). Then, mobile terminal 300 transmits generated content 50 to HMI 200 ((2) content transmission).

HMI 200 generates meta-information 60 related to the abnormality and/or event generated most recently ((3) meta-information generation), associates content 50 with corresponding meta-information 60, and transmits meta-information 60 to server 400 ((4) content and meta-information transmission).

With such a procedure, content 50 can be stored in server 400.

### (d8: Another modification related to acquisition of content 50)

As illustrated in Fig. 8(B), when HMI 200 generates content 50, not only the operation of the operator after the generation of any abnormality and/or event but also the operation immediately before the generation of the abnormality and/or event may be recorded.

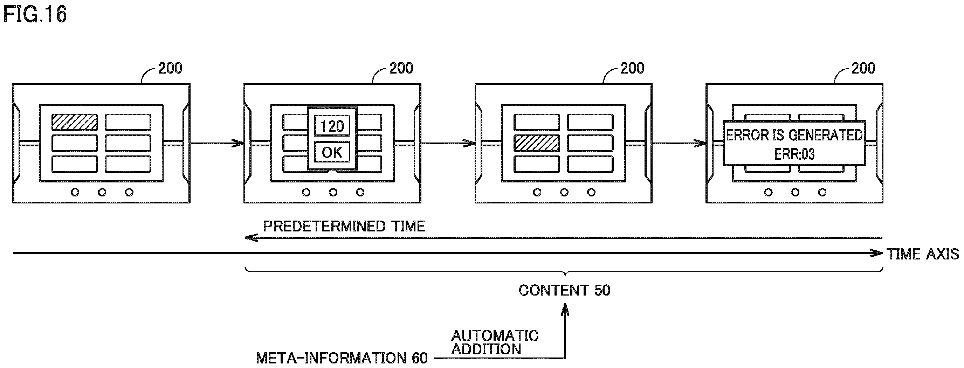

Fig. 16 is a view illustrating processing according to still another modification of the content acquisition in operating assistance system 1 of the embodiment. With reference to Fig. 16, for example, it is assumed that the operator performs some inappropriate operation to generate any abnormality. HMI 200 continuously records the operation of the operator for a predetermined time. When any abnormality is generated, HMI 200 outputs the operation for the predetermined time based on the timing at which the abnormality is generated as content 50. That is, when any abnormality and/or event is generated, HMI 200 generates content 50 in which the operation before the generation timing of the abnormality and/or event is recorded.

Furthermore, HMI 200 may automatically add meta-information 60 including the information about the generated abnormality and/or event to output content 50.

Added meta-information 60 can include an operator name, operating time, equipment of the operating target, operating content, error information, PLC status information, parameters inside the PLC, and the like.

In this way, HMI 200 outputs content 50 and corresponding meta-information 60 in association with each other with the generation of any abnormality and/or event as a trigger, so that the identification of the cause of the generation of the error and the like can be facilitated.

### (d9: Modification related to storage of content 50)

Although the example in which content 50 and meta-information 60 are stored in content database 450 of server 400 has been described, content database 450 may be disposed in any device. For example, the storage destination of content 50 and meta-information 60 may be HMI 200 or any storage connected to information system network 6. Furthermore, a plurality of devices may store content 50 and meta-information 60. Server 400 may be implemented on a cloud environment.

### (d10: Modification related to utilization of content 50)

Not mobile terminal 300, but HMI 200 may generate and transmit the query. In this case, HMI 200 generates the query including the identification information specifying the generated abnormality and transmits the query to server 400. Thereafter, HMI 200 may display the search result received from server 400, or transmit the address in which searched content 50 is stored to mobile terminal 300.

Server 400 may not only store content 50 and corresponding meta-information 60 in association with each other, but also update meta-information 60 as appropriate. For example, content 50 and meta-information 60 stored in content database 450 may be analyzed, and new information may be added to meta-information 60. Such update of meta-information 60 may be implemented using AI or the like, or may be manually input. As the newly added information, for example, content 50 having a higher degree of reference may be ranked higher according to the degree of reference of each content 50.

### <E. Operating navigation>

The operating navigation processing 44 will be described below.

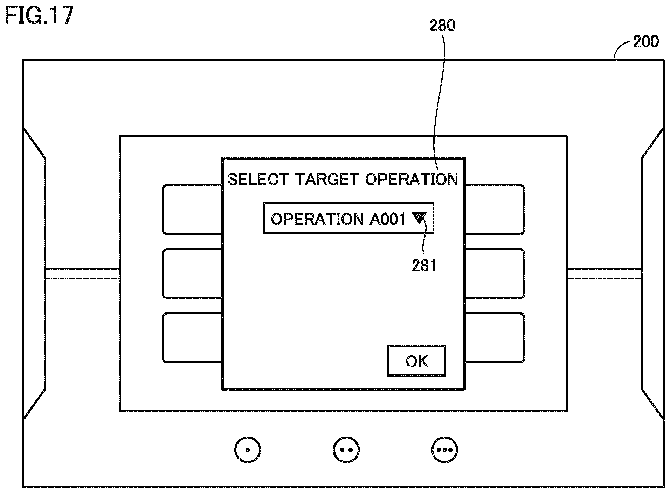

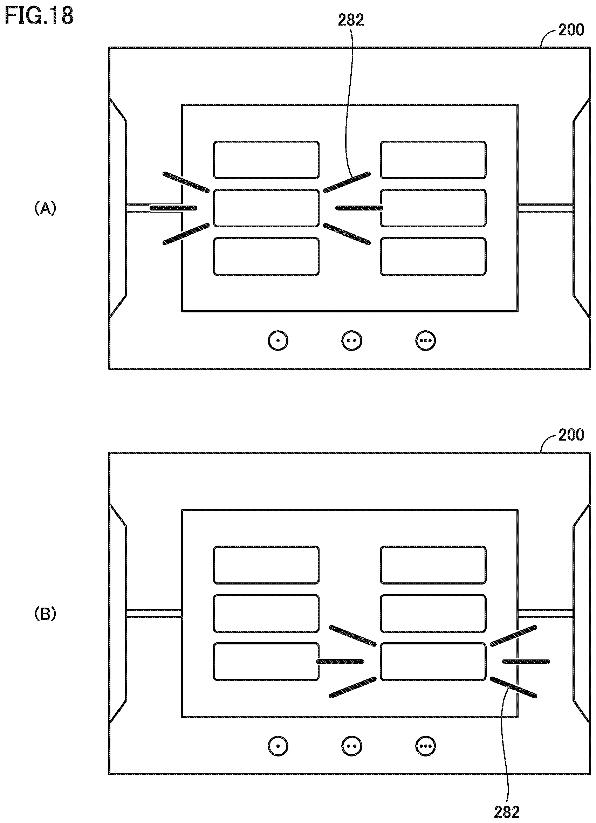

Figs. 17 and 18 are views illustrating a processing example related to operating navigation in operating assistance system 1 of the embodiment.

With reference to Fig. 17, for example, a selection window 280 selecting the target operation is displayed on the operating screen provided by HMI 200. The operator selects the target operation on selection window 280. Then, as illustrated in Figs. 18(A) and 18(B), a navigation display 282 supporting the operation is sequentially provided on the operating screen according to the selected operation. The operator sequentially presses an operating object such as a button object displayed on the operating screen while referring to navigation display 282.

Fig. 18 illustrates an example of a display mode in which the operating object to be pressed is emphasized, but the present invention is not limited thereto. For example, a message as illustrated in Fig. 12 may be displayed, or information supporting the operation may be displayed in a specific display mode.

The operating object to be pressed in each operation may be searched for and determined using AI or the like based on meta-information 60 added to content 50 as described above. Alternatively, the order of the operating object to be pressed may be previously determined for each operation.

When such the operating navigation is provided on the operating screen, even the operator with the little knowledge and experience can easily perform the same operation as the skilled operator.

### <F. Operating object shortcut production>

Operating object shortcut production processing 46 will be described below.

The "operating object shortcut" means an object capable of performing the same processing and operation as those of the operating object disposed in any operating screen. The operating object shortcut may be implemented by referring to the original operating object, or implemented by copying the original operating object. Typically, the operating object shortcut is used to reuse or rearrange the operating object such as the button object included in the operating screen.

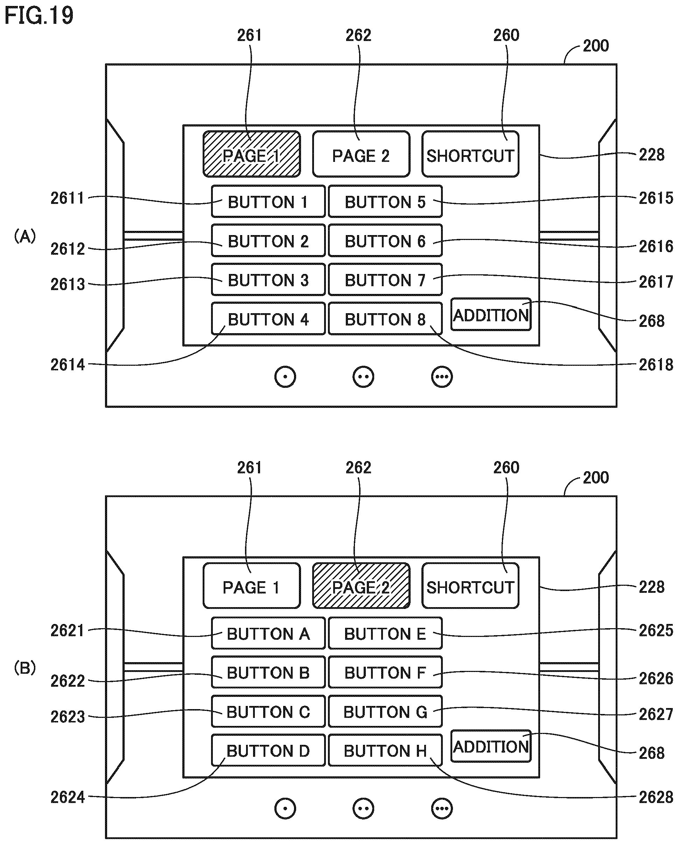

Fig. 19 is a schematic diagram illustrating an example of the operating screen provided by HMI 200 of operating assistance system 1 of the embodiment. As an example, the operating screen provided by HMI 200 is configured to be switchable in units of pages. Fig. 19(A) illustrates an example of the operating screen when a page 1 is selected, and Fig. 19(B) illustrates an example of the operating screen when a page 2 is selected.

The operating screens of HMI 200 in Figs. 19(A) and 19(B) include a button object 261 selecting page 1, a button object 262 selecting page 2, and a button object 260 displaying the shortcut to the operating object as described later.

The operating screen of HMI 200 in Fig. 19(A) is in a state where button object 261 is selected and button objects 2611 to 2618 are displayed. On the other hand, the operating screen of HMI 200 in Fig. 19(B) is in a state where button object 262 is selected and button object 2621 to 2628 are displayed.

When a button object 268 instructing addition as the shortcut is selected, the production of the shortcut to any operating object is started. As an example of the operation, when any operating object is selected in a period in which button object 268 is selected, the shortcut to the selected operating object is sequentially added.

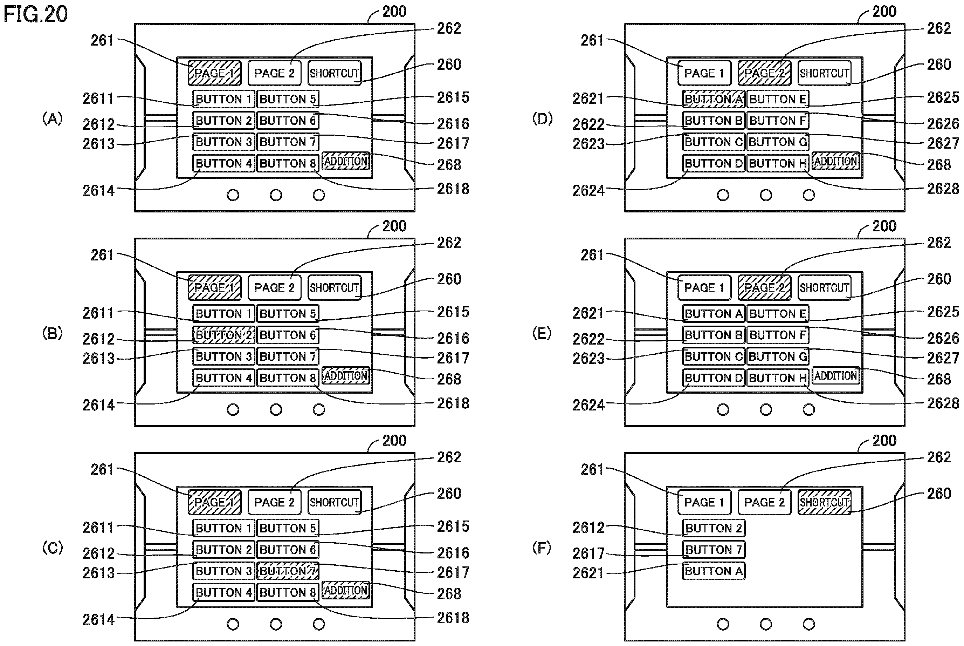

Fig. 20 is a schematic diagram illustrating an example of shortcut production to the operating object in HMI 200 of operating assistance system 1 of the embodiment.

As illustrated in Fig. 20(A), when button object 268 is selected, the production of the shortcut is enabled. For example, it is assumed that button object 2612 is selected as illustrated in Fig. 20(B), and then button object 2617 is selected as illustrated in Fig. 20(C). Furthermore, as illustrated in Fig. 20(D), it is assumed that button object 262 is selected and button object 2621 is selected while the operating screen of page 2 is displayed.

That is, it is assumed that button object 2621 of page 2 is selected after button object 2612 and button object 2617 of page 1 are selected. Then, as illustrated in Fig. 20(E), when button object 268 is selected again, the production of the shortcut is invalidated. The shortcut to the operating object is produced by this series of operations. As illustrated in Fig. 20(F), when button object 260 is selected, the screen is switched to the shortcut operating screen, and the shortcut produced by the series of operations is displayed on the shortcut operating screen. That is, the shortcuts for button object 2612, button object 2617, and button object 2621 selected by the series of operations are generated and displayed.

Although Figs. 19 and 20 illustrate the example including only one operating screen displaying the shortcut for convenience of description, the present invention is not limited thereto, and a plurality of operating screens displaying the shortcuts may be prepared.

As described above, operating object shortcut production processing 46 includes processing for generating another operating screen collecting and displaying the selected one or more operating objects in accordance with the selection of an operating object among the plurality of operating objects included in the operating screen of HMI 200.

The operator can aggregate only the operating objects used for a specific operation or a specific purpose among the plurality of operating objects on the same operating screen, so that operating efficiency can be increased and the generation of a defect such as an operating mistake can be reduced. This is particularly effective when the operating object used for the specific operation or the specific purpose is arranged over a plurality of pages.

### <G. Production of page bookmark>

Page bookmark production processing 48 will be described below.

"Page bookmark" means an object accessing a specific page included in the operating screen. The page bookmark basically includes information specifying a page.

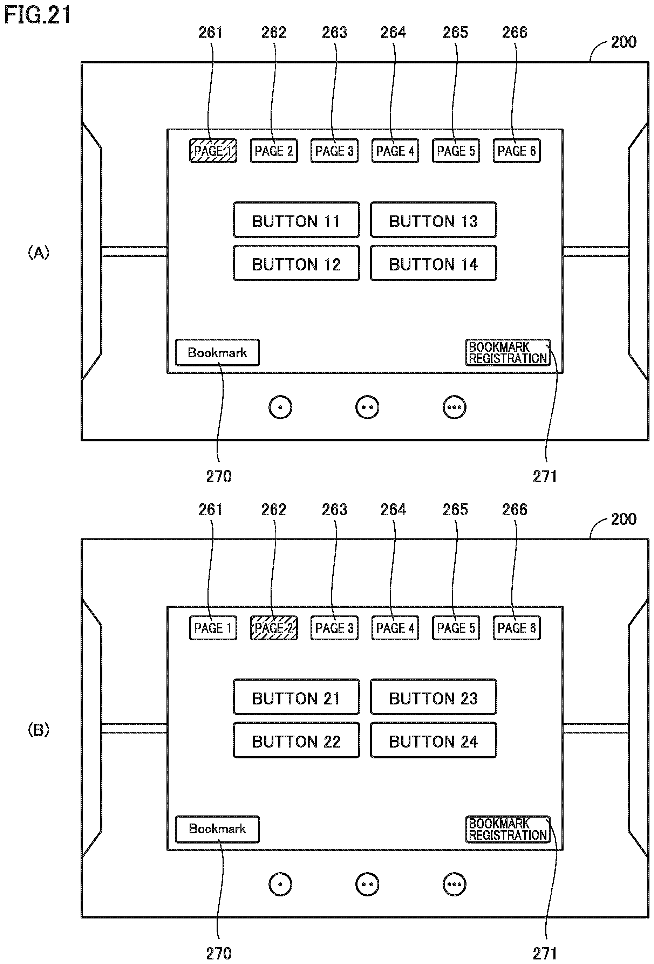

Fig. 21 is a schematic diagram illustrating another example of the operating screen provided by HMI 200 of operating assistance system 1 of the embodiment. The operating screen in Fig. 21 is configured to be switchable in units of pages, and includes the operating screen for 6 pages as an example. Fig. 21(A) illustrates an example of the operating screen in the case where page 1 is selected, and Fig. 21(B) illustrates an example of the operating screen in the case where page 2 is selected.

The operating screens of HMI 200 in Figs. 21(A) and 21(B) include button objects 261 to 266 selecting each of page 1 to 6. The operating screen as illustrated in Fig. 21(A) is displayed when button object 261 is selected, and the operating screen as illustrated in Fig. 21(B) is displayed when button object 262 is selected.

The operating screen of HMI 200 in Figs. 21(A) and 21(B) include a button object 270 displaying the bookmark and a button object 271 instructing the production of the bookmark. When button object 271 is selected while a page is displayed, the displayed page is registered as the bookmark.

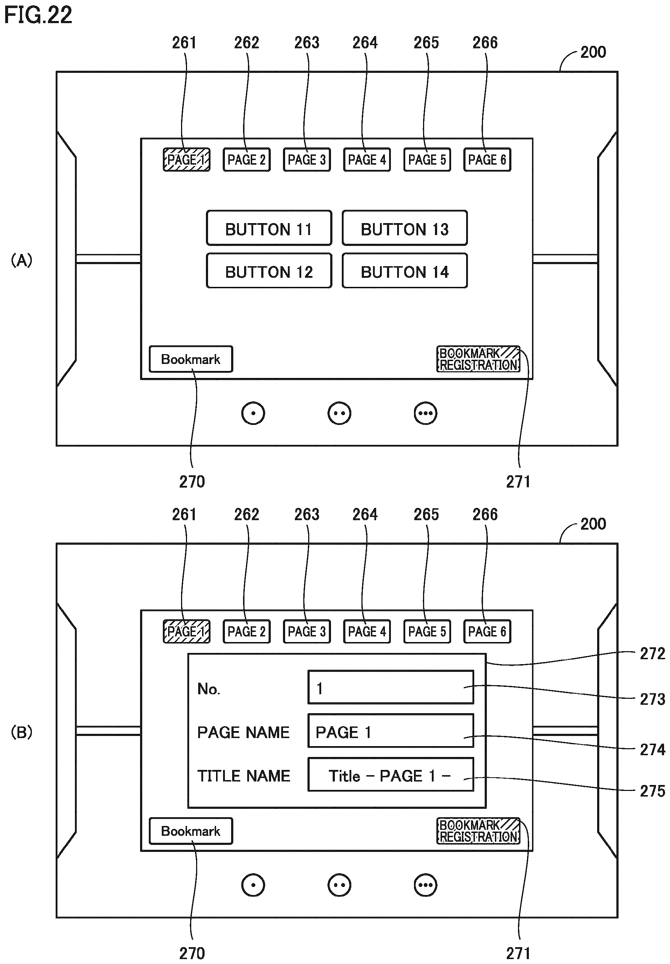

Fig. 22 is a view illustrating a procedure example of page bookmark production in HMI 200 of operating assistance system 1 of the embodiment. As illustrated in Fig. 22(A), when button object 271 is pressed while a page is selected, an input window 272 inputting attribute information about the generated bookmark is displayed as illustrated in Fig. 22(B). Input window 272 includes an input field 273 inputting a registration number of the shortcut, an input field 274 inputting the name of the page, and an input field 275 inputting the name of a displayed title.

According to the production procedure as illustrated in Fig. 22, the target page is registered as the bookmark. When button object 270 is pressed, the produced bookmark is displayed.

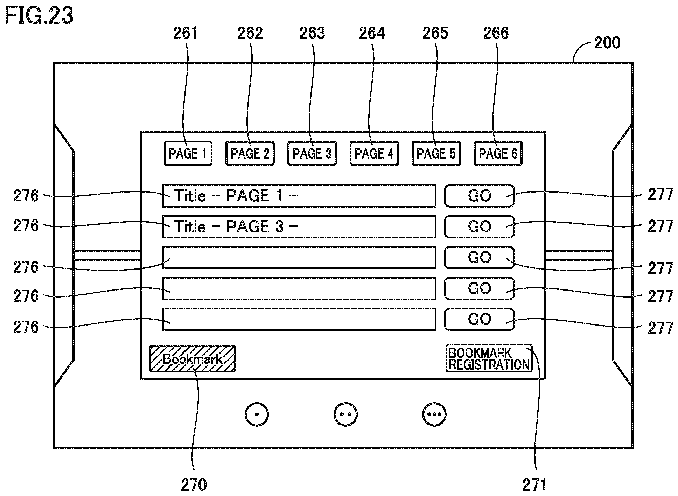

Fig. 23 is a view illustrating a display example of the page bookmark in HMI 200 of operating assistance system 1 of the embodiment. With reference to Fig. 23, when button object 270 is pressed, a list of previously produced bookmarks is displayed. Each bookmark includes a title 276 and a button object 277 indicating a transition to the registered page.

When button object 277 is pressed, the previously-registered page is displayed in HMI 200.

Fig. 23 illustrates an example in which bookmarks of two pages are created, but the number of bookmarks that can be produced is not particularly limited.

As described above, page bookmark production processing 48 includes the processing for generating another operating screen including the operating object (bookmark) that accesses the selected one or more pages in response to the selection of a page among the operating screens of the plurality of pages provided by HMI 200.

When the processing for producing the page bookmark is implemented, the transition to the specific operation or the operating screen used for the specific application can more easily performed, so that the efficiency of the operation can be increased and the generation of the defect such as the operation mistake can be reduced.

### <H. Modifications>

In the above-described embodiment, operating assistance system 1 mainly including HMI 200, mobile terminal 300, and server 400 has been exemplified, but the present invention is not limited thereto. For example, any device may be additionally adopted, or a function that a certain device is responsible for may be performed by another device. That is, any implementation form of hardware may be adopted as long as the various pieces of processing described above can be implemented.

### <I. Appendix>

The above embodiment includes the following technical ideas.

### [Configuration 1]

An operating assistance system (1) directed to a control system (2) for controlling a control target, the operating assistance system comprising:
acquisition means (200, 300) configured to acquire a content (50) in which an operation of an operator on a human machine interface (HMI) (200) is recorded;
acquisition means (200, 300) configured to acquire meta-information (60) related to the acquired content;
storage means (400) configured to store the acquired content and the acquired meta-information in association with each other;
search means (400) configured to search for a content matched with a requested query based on the stored meta-information; and
reproduction means (200, 300) configured to reproduce the selected content.

### [Configuration 2]

The operating assistance system described in configuration 1, wherein the acquisition means includes a mobile terminal (300) configured to electrically and/or optically observe an operating screen of the HMI.

### [Configuration 3]

The operating assistance system described in configuration 1, wherein the acquisition means includes a capture application (2124) that records an operating screen represented on the HMI.

### [Configuration 4]

The operating assistance system described in configuration 1, wherein when an abnormality and/or an event is generated, the acquisition means generates the content in which an operation before generation timing of the abnormality and/or the event is recorded.

### [Configuration 5]

The operating assistance system described in any one of configurations 1 to 4, wherein
when an abnormality and/or an event is generated, the HMI is configured to output information related to the generated abnormality and/or event, and
the output information is directly or indirectly available as the query.

[Configuration 6]

The operating assistance system described in any one of configurations 1 to 5, further comprising generation means (200, 300) configured to generate the query according to a search condition.

### [Configuration 7]

The operating assistance system described in any one of configurations 1 to 6, wherein the reproduction means includes a mobile terminal (300) that reproduces the selected content.

### [Configuration 8]

The operating assistance system described in any one of configurations 1 to 7, wherein
the meta-information includes an operating history indicating a place on which an operator operated and an operation time of that operation, and
the reproduction means additionally displays information (252) indicating a content to be operated on an operating screen of the HMI based on the meta-information associated with the selected content.

### [Configuration 9]

The operating assistance system described in any one of configurations 1 to 8, further comprising first generation means (200) configured to generate a second operating screen collecting and displaying selected one or more operating objects according to the selection of an operating object among a plurality of operating objects included in an operating screen of the HMI.

### [Configuration 10]

The operating assistance system described in any one of configurations 1 to 9, further comprising second generation means (200) configured to generate a third operating screen including an operating object accessing selected one or more pages in response to the selection of a page among operating screens of a plurality of pages provided by the HMI.

### [Configuration 11]

An operating support method executed by a control system (2) controlling a control target, the operating support method comprising:
(SQ106) acquiring a content in which an operation of an operator on a human machine interface (HMI) is recorded;
(SQ104) acquiring meta-information related to the acquired content;
(SQ110) storing the acquired content and the acquired meta information in association with each other;
(SQ210) searching for a content matched with a requested query based on the stored meta information; and
(SQ220, SQ222) reproducing the selected content.

### <J. Advantages>

According to the operating assistance system of the embodiment, the mechanism that enables the operator with the little knowledge and experience to perform the efficient and accurate operation can be provided.

It should be considered that the disclosed embodiment is an example in all respects and not restrictive. The scope of the present invention is defined by not the above description, but the claims, and it is intended that all modifications within the meaning and scope of the claims are included in the present invention.

### REFERENCE SIGNS LIST

1: operating assistance system, 2: control system, 4: control system network, 6: information system network, 8: the Internet, 10: field device group, 12: remote I/O device, 14: relay group, 16: servo driver, 18: servo motor, 20: access point, 30: gateway, 42, 44, 46, 48: processing, 50: content, 60: meta-information, 62, 64: image code, 100: PLC, 102, 202, 302, 402: processor, 104: chip set, 106, 206, 306, 406: main memory, 110, 210, 310, 410: storage, 112, 212: system program, 114, 214: user program, 120: control system network controller, 122: Information system network controller, 124, 224, 324: USB controller, 126: memory card interface, 128: memory card, 200: HMI, 204: optical drive, 205: recording medium, 208, 308, 408: bus, 220, 420: network controller, 226, 326, 426: input unit, 228, 328, 428: display unit, 250, 260, 261, 262, 266, 268, 270, 271, 277, 2611, 2612, 2617, 2618, 2621, 2628: button object, 252: narration, 272: input window, 273, 274, 275: input field, 276: title, 280: selection window, 282: navigation display, 300: mobile terminal, 311, 411: OS, 312, 412: application program, 320: wireless network controller, 322: imaging unit, 350: search button, 351, 352, 353: search word input field, 356: thumbnail, 358: description, 400: server, 450: content database, 2122: VNC server, 2124, 3124: capture application, 2126: FTP server, 3122: VNC client, 3126: FTP client, 3128: imaging application

## Claims

1. An operating assistance system directed to a control system for controlling a control target, the operating assistance system comprising:
acquisition means configured to acquire a content in which an operation of an operator on a human machine interface (HMI) is recorded;
acquisition means configured to acquire meta-information related to the acquired content;
storage means configured to store the acquired content and the acquired meta-information in association with each other;
search means configured to search for a content matched with a requested query based on the stored meta-information; and
reproduction means configured to reproduce a selected content.

2. The operating assistance system according to claim 1, wherein the acquisition means includes a mobile terminal configured to electrically and/or optically observe an operating screen of the HMI.

3. The operating assistance system according to claim 1, wherein the acquisition means includes a capture application that records an operating screen represented on the HMI.

4. The operating assistance system according to claim 1, wherein when an abnormality and/or an event is generated, the acquisition means generates the content in which an operation before generation timing of the abnormality and/or the event is recorded.

5. The operating assistance system according to any one of claims 1 to 4, wherein
when an abnormality and/or an event is generated, the HMI is configured to output information related to the generated abnormality and/or event, and
the output information is directly or indirectly available as the query.

6. The operating assistance system according to any one of claims 1 to 5, further comprising generation means configured to generate the query according to a search condition.

7. The operating assistance system according to any one of claims 1 to 6, wherein the reproduction means includes a mobile terminal that reproduces the selected content.

8. The operating assistance system according to any one of claims 1 to 7, wherein
the meta-information includes an operating history indicating a place on which an operator operated and an operation time of that operation, and
the reproduction means additionally displays information indicating a content to be operated on an operating screen of the HMI based on the meta-information associated with the selected content.

9. The operating assistance system according to any one of claims 1 to 8, further comprising first generation means configured to generate a second operating screen collecting and displaying selected one or more operating objects according to the selection of an operating object among a plurality of operating objects included in an operating screen of the HMI.

10. The operating assistance system according to any one of claims 1 to 9, further comprising second generation means configured to generate a third operating screen including an operating object accessing selected one or more pages in response to the selection of a page among operating screens of a plurality of pages provided by the HMI.

11. An operating support method executed by a control system for controlling a control target, the operating support method comprising:
acquiring a content in which an operation of an operator on a human machine interface (HMI) is recorded;
acquiring meta-information related to the acquired content;
storing the acquired content and the acquired meta information in association with each other;
searching for a content matched with a requested query based on the stored meta information; and
reproducing a selected content.
